# EUROPÄISCHE PATENTSCHRIFT

(11) **EP 0 329 926 B1**
(45) Veröffentlichungstag und Bekanntmachung des Hinweises auf die Patenterteilung: **15.12.1993**
(21) Anmeldenummer: 89100136.4
(22) Anmeldetag: 05.01.1989
(51) Int. Cl.: H02H 7/085

(54) **Ueberlastschutz von Elektromotoren**
Overload protection for electric motors
Protection contre les surcharges pour moteurs électriques

(30) Priorität: 15.02.1988 DE 3804679
(43) Veröffentlichungstag der Anmeldung: 30.08.1989
(73) Patentinhaber: ROBERT BOSCH GMBH, 70442 Stuttgart (DE)
(72) Erfinder: Hornung, Friedrich, Dipl.-Ing., D-7000 Stuttgart 80 (DE); Gerschner, Martin, D-7022 Leinfelden-Echterdingen 1 (DE)

(56) Entgegenhaltungen:
- DE-A- 3 239 847
- DE-A- 3 248 217
- DE-A- 3 422 485
- DE-B- 1 613 891
- US-A- 4 330 808

## Beschreibung

### Stand der Technik

Die Erfindung geht aus von einer Vorrichtung zur Temperaturregelung eines Elektromotors nach der Gattung des Hauptanspruchs. Es sind schon Vorrichtungen zur Temperaturregelung eines Elektromotors bekannt, die einen Überlastschutz bzw. eine Strombegrenzung bewirken. Solche Vorrichtungen weisen einen Meßwiderstand auf, der vom Motor-bzw. Laststrom durchflossen wird, und dessen Spannungsabfall einer Auswerteschaltung zugeführt wird. Bei Überschreiten eines vorbestimmten Grenzwertes wird die Stromzufuhr zum Motor reduziert oder unterbrochen. Solche Schaltungen werden beispielsweise in Applikationsschriften von Halbleiter-Herstellern, z.B. Telefunken-Elektronik, Datenbuch 1984, Phasenanschnittssteuerschaltungen und Nullspannungsschalter, oder Motorola/Plessey, 1982, Motorspeed applications using the TDA 2085 A angeboten. Bei diesen Überlastschutzschaltungen ist ungünstig, daß der Motorstrom zwar eine Information über den Belastungszustand des Motors liefert, nicht aber über den Erwärmungszustand. Fur einen Überlastschutz ist aber letztendlich nur das Erfassen des Erwärmungszustands des Motors hinreichend.

Bei der DE-OS 34 22 485 wird die Erwärmung des Motors über einen Meßwiderstand bestimmt, der vom Laststrom des Motors aufgeheizt wird. Durch die Anordnung im Kühlluftstrom des Motors erfaßt der Meßwiderstand nicht nur die stromabhängige Erwärmung, sondern auch die Temperatur des Luftstromes. Hierbei ist ungünstig, daß zur Umsetzung des Stromes in Wärme grundsätzlich ein Meßwiderstand in einer speziellen konstruktiven Form notwendig ist. Weiterhin ist ungünstig, daß die die thermische Zeitkonstante des Motors bestimmenden statischen Größen, nämlich Wärmewiderstand und Wärmevolumen, am Meßwiderstand sehr schlecht simuliert und variiert werden können.

### Vorteile der Erfindung

Die erfindungsgemäße Vorrichtung mit den kennzeichnenden Merkmalen des Hauptanspruchs hat demgegenüber den Vorteil, daß kein Meßwiderstand zur Erfassung des Motorstromes benötigt wird. Dadurch wird die maximale nutzbare Leistung des geregelten Motors erhöht. Weiterhin ist vorteilhaft, daß durch den Wegfall des Widerstandes und die einfache Zuordnung des Temperaturfühlers zum Halbleiterschalter erhebliche Kosteneinsparungen gegeben sind.

Besonders vorteilhaft ist auch, daß auf eine einfache Weise, nämlich durch Veränderung des Montageabstands zwischen dem Temperaturfühler und dem Halbleiterschalter der Wärmewiderstand des Motors nachgebildet werden kann.

Durch die in den Unteransprüchen aufgeführten Maßnahmen sind vorteilhafte Weiterbildungen und Verbesserungen der im Hauptanspruch angegebenen Vorrichtung möglich. Besonders vorteilhaft ist, daß der Temperaturfühler auf einem Kühlkörper im Luftstrom des Motors angeordnet ist, wodurch die Anpassung an das Wärmeverhalten des Motors besonders vereinfacht wird. Diese Anordnung eignet sich in vorteilhafter Weise zum Einbau im Luftkanal eines Elektrowerkzeugs, da sie eine kleine Bauform aufweist. Auch ist die Verwendung eines Temperaturfühlers mit NTC- oder PTC-Temperaturcharakteristik vorteilhaft, da er besonders robust ist und zuverlässig arbeitet. Weiterhin ist die gemeinsame Anordnung des Temperaturfühlers und des Halbleiterschalters auf dem Kühlkörper von Vorteil, um eine gute Wärmekopplung zu gewährleisten. In weiterer Ausgestaltung der Erfindung ist vorteilhaft, daß der Kühlkörper eine glatte oder teilweise gerippte Oberfläche aufweist, die den thermischen Widerstand der Anordnung bestimmt, wodurch die Anpassung an den Motor vereinfacht wird.

Die besondere Ausgestaltung des Kühlkörpers durch die Wahl des Materials, der Wandstärke b, der Größen l und h sowie einer Verengung zwischen dem Temperaturfühler und dem Halbleiterschalter ermöglichen besonders vorteilhaft eine einfache Simulation der Wärmekapazität, des Wärmewiderstandes und der Regelzeitkonstanten der Anordnung. Auch ist vorteilhaft, daß zur Verbesserung der Wärmeankopplung der Temperaturfühler in einer Öffnung befestigt, mit einer Tasche oder abgebogenen Lasche des Kühlkörpers verbunden ist.

### Zeichnung

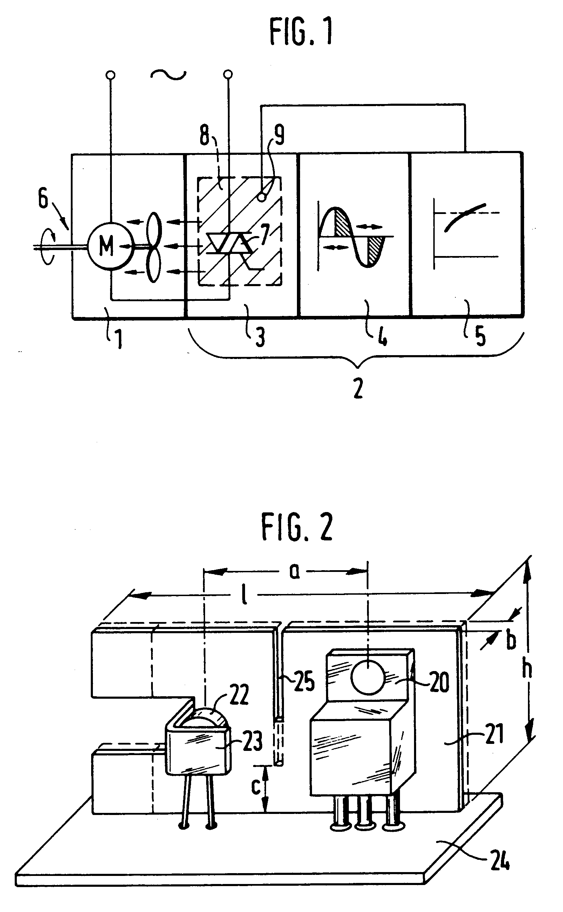

Ein Ausführungsbeispiel der Erfindung ist in der Zeichnung dargestellt und in der nachfolgenden Beschreibung näher erläutert. Es zeigen Figur 1 ein Blockschaltbild, Figur 2 ein Ausführungsbeispiel.

### Beschreibung

Ein Blockschaltbild des Ausführungsbeispiels ist in Figur 1 dargestellt. Der Motor 1 bildet mit dem Elektronik-Baustein 2 eine funktionelle Einheit in Form einer Regelstrecke 6. Der Elektronik-Baustein 2 besteht aus einem Stellglied 3 mit einem Halbleiterschalter 7, einem Kühlkörper 8 und einem auf den Kühlkörper befindlichen Temperaturfühler 9. Der Halbleiterschalter 7 kann als Triac, Thyristor oder Transistor ausgeführt sein. Dem Stellglied 3 ist ein Steuerteil 4 vorgeschaltet, das den Stromflußwinkel oder das Tastverhältnis des Halbleiterschalters 7 beeinflußt. Das Steuerteil 4 wird beispielsweise realisiert durch einen handelsüblichen integrierten Steuerbaustein. Dem Steuerteil 4 ist wiederum eine Auswerteschaltung 5 vorgeschaltet. Auch sie kann ein handelsüblicher Elektronik-Baustein sein, wie er als Schmitt-Trigger oder Schwellwertverstärker Verwendung findet. Die Eingangsklemmen der Auswerteschaltung 5 sind mit dem Temperaturfühler 9 verbunden, der beispielsweise auf den Kühlkörper 8 in der Nähe des Halbleiterschalters 7 montiert ist. Der Kühlkörper 8 mit den Komponenten der Regelstrecke 6 wird derart befestigt, daß er im Luftstrom des Motors steht.

Im folgenden wird die Wirkungsweise der Vorrichtung beschrieben.

Bei Inbetriebnahme des Motors 1 unterliegen der Halbleiterschalter 7 und der Kühlkörper 8 zusammen demselben Luftstrom. Unter der Voraussetzung, daß das Wärmeverhalten bzw. die Wärmezeitkonstante des Kühlkörpers 8 dem des Motors angepaßt ist, spiegelt die Kühlkörpertemperatur die Motortemperatur wieder. Wenn die Temperatur am Motor und folglich auch am Kühlkörper einen bestimmten Grenzwert übersteigt, dann bewirkt das Signal des Temperaturfühlers 9, daß die Auswerteschaltung 5 auf das Steuerteil 4 derart einwirkt, daß der Stromflußwinkel des Halbleiterschalters 7 zurückgenommen wird, und sich die Motortemperatur zumindest nicht mehr erhöhen kann.

Ein Ausführungsbeispiel ist in Figur 2 dargestellt. Es weist einen Kühlkörper 21 auf, auf den der Halbleiterschalter 20 und der Temperaturfühler 22 montiert sind. Zur Verbesserung des Wärmeübergangs steckt der Temperaturfühler in einer Öffnung, einer Tasche oder einer abgebogenen Lasche 23 des Kühlkörpers 21. Die elektrische Verbindung des Temperaturfühlers 22 und des Halbleiterschalters 20 in der Regelstrecke 2 erfolgt über die Leiterplatte 24. Zwischen dem Halbleiterschalter 20 und dem Temperaturfühler 22 ist in den Kühlkörper 21 als Verengung ein Schlitz 25 gefräst. Die Tiefe des Schlitzes ist durch das Maß c festgelegt, der Abstand zwischen dem Halbleiterschalter 20 und dem Temperaturfühler 22 ist durch das Maß a festgelegt. Weiterhin ist die Materialstärke des Kühlkörpers durch das Maß b vorgegeben.

Durch Verändern der Maße a, b oder c kann auf einfache Weise das Temperaturverhalten des Motors simuliert werden. Dabei stellt das Maß b ein Maß für die Wärmekapazität des Systems dar, während durch die Maße a und c im wesentlichen der Wärmewiderstand der Anordnung bestimmt wird. Da dieses Ausführungsbeispiel ebenso wie das erste im Luftstrom des Motors angeordnet ist, ist bei geeigneter Positionierung dieser Anordnung eine einfache Anpassung an das Wärmeverhalten des Motors möglich. So kann beispielsweise die Schaltungsanordnung im Ansaugkanal des Motors bzw. bei Berücksichtigung der Motorwärme im Abluftkanal vorgesehen oder direkt am Ständer des Motors 1 befestigt werden.

## Patentansprüche

1. Vorrichtung zur Temperaturregelung eines Elektromotors insbesondere eines Universalmotors, mit einem Temperaturfühler (9; 22) sowie einem dem Motor (1) vorgeschalteten, auf einem Kühlkörper (8; 21) montierten Halbleiterschalter (7; 20), die in thermischer Wirkverbindung im Kühlluftstrom des Motors angeordnet sind, und mit einer Phasenanschnittsteuerung (4), die den Stromflußwinkel für den Motor bei zunehmender Temperatur zurücknimmt, dadurch gekennzeichnet, daß der Temperaturfühler (9; 22) zusammen mit dem Halbleiterschalter (7; 20) im wesentlichen in einem vom Wärmewiderstand des Motors (1) abhängigen Abstand vom Halbleiterschalter auf dem Kühlkörper (8; 21) angeordnet ist und daß die Wärmekapazität des Motors (1) durch die Wahl der Größe (l, h) und/oder der Wandstärke (b) des Kühlkörpers (8; 21) nachbildbar ist.

2. Vorrichtung nach Anspruch 1, dadurch gekennzeichnet, daß der Temperaturfühler (9; 22) und der Halbleiterschalter (7; 20) im Luftkanal eines Elektrohandwerkzeugs befestigt ist.

3. Vorrichtung nach einem der vorhergehenden Ansprüche, dadurch gekennzeichnet, daß der Temperaturfühler (9; 22) ein NTC- oder PTC-Widerstand ist.

4. Vorrichtung nach einem der vorhergehenden Ansprüche, dadurch gekennzeichnet, daß der Kühlkörper (8; 21) eine glatte oder teilweise gerippte Oberfläche aufweist.

5. Vorrichtung nach einem der vorhergehenden Ansprüche, dadurch gekennzeichnet, daß der Kühlkörper (8; 21) zwischen dem Halbleiterschalter (7; 20) und dem Temperaturfühler (9; 21) eine Verengung, vorzugsweise einen Schlitz (25) aufweist.

6. Vorrichtung nach einem der vorhergehenden Ansprüche, dadurch gekennzeichnet, daß der Temperaturfühler (9; 22) auf dem Kühlkörper (8; 21) in einer Öffnung, einer Tasche oder abgebogenen Lasche (23) befestigt ist.

## Claims

1. Device for controlling the temperature of an electric motor, in particular of a universal motor, having a temperature sensor (9, 22) as well as a semiconductor switch (7, 20), which is connected upstream of the motor (1) and mounted on a heat sink (8, 21), which are arranged in operative thermal connection in the cooling air flow of the motor, and having phase-gating control (4) which reduces the angle of current flow for the motor with increasing temperature, characterized in that the temperature sensor (9; 22) together with the semiconductor switch (7; 20) is arranged on the heat sink (8; 21) essentially at a distance from the semiconductor switch which depends on the thermal resistance of the motor (1), and that the thermal capacity of the motor (1) can be simulated by choosing the magnitude (l, h) and/or the wall thickness (b) of the heat sink (8; 21).

2. Device according to Claim 1, characterized in that the temperature sensor (9; 22) and the semiconductor switch (7; 20) are mounted in the air duct of an electric tool.

3. Device according to one of the preceding claims, characterized in that the temperature sensor (9; 22) is an NTC resistor or PTC resistor.

4. Device according to one of the preceding claims, characterized in that the heat sink (8; 21) has a smooth or partially ribbed surface.

5. Device according to one of the preceding claims, characterized in that the heat sink (8; 21) has a constriction, preferably a slot (25), between the semiconductor switch (7; 20) and the temperature sensor (9; 21).

6. Device according to one of the preceding claims, characterized in that the temperature sensor (9; 22) is mounted on the heat sink (8; 21) in an opening, a pocket or a bent lug (23).

## Revendications

1. Dispositif de régulation de température d'un moteur électrique, notamment d'un moteur universel, comportant un palpeur de température (9, 22) ainsi qu'un commutateur à semi-conducteur (7, 20) monté sur un radiateur (8, 21) en amont du moteur (1), le palpeur et le commutateur étant montés dans le courant d'air de refroidissement du moteur pour coopérer sur le plan thermique, ainsi qu'une commande de découpage de phase (4) qui reprend l'angle de passage de courant du moteur lorsque la température augmente, dispositif caractérisé en ce que le palpeur de température (9, 22) ainsi que le commutateur à semi-conducteur (7, 20) sont montés essentiellement à une distance dépendant de la résistance thermique du moteur (1) par rapport au commutateur à semiconducteur sur le radiateur (8, 21), et en ce que la capacité thermique du moteur (1) peut être simulée par le choix de la taille (l, h) et/ou de l'épaisseur de paroi (b) du radiateur (8, 21).

2. Dispositif selon la revendication 1, caractérisé en ce que le palpeur de température (9, 22) et le commutateur à semi-conducteur (7, 20) sont fixés dans le canal d'air d'un outil électroportatif.

3. Dispositif selon l'une des revendications précédentes, caractérisé en ce que le palpeur de température (9, 22) est une résistance NTC ou PTC.

4. Dispositif selon l'une des revendications précédentes, caractérisé en ce que le radiateur (8, 21) a une surface lisse ou partiellement nervurée.

5. Dispositif selon l'une des revendications précédentes, caractérisé en ce que le radiateur (8, 21) comporte une partie rétrécie, notamment une fente (25) entre le commutateur à semi-conducteur (7, 20) et le palpeur de température (9, 21).

6. Dispositif selon l'une des revendications précédentes, caractérisé en ce que le palpeur de température (9, 22) est fixé sur le radiateur (8, 21) dans une ouverture, une poche ou une patte recourbée (23).
